# EUROPEAN PATENT SPECIFICATION

(11) **EP 4 318 730 B1**
(45) Date of publication and mention of the grant of the patent: **02.07.2025**
(21) Application number: 22916514.7
(22) Date of filing: 07.12.2022
(51) Int. Cl.: H01M 10/42, H01M 10/48, G01M 7/08, G01N 3/30

(54) **SHOCK TEST APPARATUS FOR POUCH-SHAPED BATTERY CELLS AND SHOCK TEST METHOD FOR POUCH-SHAPED BATTERY CELLS USING THE SAME**
STOSSTESTVORRICHTUNG FÜR BEUTELARTIGE BATTERIEZELLE UND STOSSTESTVERFAHREN FÜR BEUTELARTIGE BATTERIEZELLE DAMIT
DISPOSITIF D'ESSAI AU CHOC POUR CELLULE DE BATTERIE DE TYPE POCHETTE, ET PROCÉDÉ D'ESSAI AU CHOC POUR CELLULE DE BATTERIE DE TYPE POCHETTE UTILISANT CELUI-CI

(30) Priority: 03.01.2022 KR 20220000456
(43) Date of publication of application: 07.02.2024
(73) Proprietor: LG Energy Solution, Ltd., Seoul 07335 (KR)
(72) Inventor: HAN, Jeong Hee, Daejeon 34122 (KR); CHO, Kyu Sang, Daejeon 34122 (KR); KIM, Hyun Tae, Daejeon 34122 (KR)
(74) Representative: Plasseraud IP
(86) International application number: PCT/KR2022/019854
(87) International publication number: WO 2023/128368

(56) References cited:
- CN-A- 105 203 964
- CN-U- 202 686 233
- CN-U- 211 178 914
- JP-A- 2011 085 415
- KR-B1- 101 949 106
- US-A1- 2018 074 131

## Description

### [Technical Field]

This application claims the benefit of priority to Korean Patent Application No. 2022-0000456 filed on January 3, 2022.

The present invention relates to a shock test apparatus for pouch-shaped battery cells and a shock test method for pouch-shaped battery cells using the same, and more particularly to a shock test apparatus for pouch-shaped battery cells using a jig having an incision portion and a through-hole portion formed therein, thereby improving accuracy and reliability in results of a shock test performed on a pouch-shaped battery cell, and a shock test method for pouch-shaped battery cells using the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, when the device is an electric vehicle, vibration and shock may be generated during driving of the electric vehicle, and shock may be applied to the battery due to collision between vehicles. Consequently, safety of the battery against shock is required, and therefore accuracy and reliability in a battery shock verification test are required.

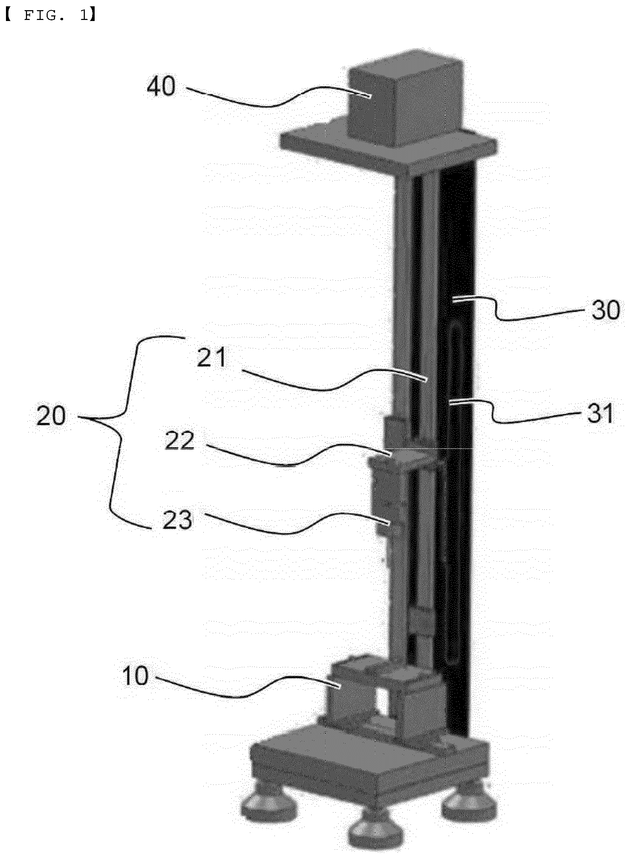

FIG. 1 shows a conventional shock test apparatus. As shown in FIG. 1, the shock test apparatus includes a jig 10 configured to fix a battery pack, a punch unit 20 configured to drop from a predetermined height in order to apply shock to the battery pack, a body 30 having one side connected to the jig 10 and the other side connected to the punch unit 20, and a controller 40 configured to store test conditions as data.

When a shock test is performed on a battery cell using the conventional shock test apparatus, a separate support configured to maintain the shape of the battery cell is not provided, whereby the battery cell may be bent or folded when the battery cell is fixed to the jig 10, and therefore reliability and accuracy in test results may be deteriorated. D1 relates to an apparatus and method for conducting a nail penetration test for a secondary battery. D2 relates to a test bench for lithium-ion battery testing.

### (Prior Art Document)

(Patent Document 1) Korean Patent Application Publication No. 2018-0061614
(Patent Document 2) CN 105 203 964 A discloses a similar shock test apparatus according to the preamble of claim 1.

### [Disclosure]

### [Technical Problem]

The present invention has been made in view of the above problems, and it is an object of the present invention to provide a shock test apparatus for pouch-shaped battery cells capable of inducing deformation of only a pressed part of a pouch-shaped battery cell while maintaining the original shape of the pouch-shaped battery cell when a shock test is performed on the pouch-shaped battery cell and a shock test method for pouch-shaped battery cells using the same.

It is another object of the present invention to provide a shock test apparatus for pouch-shaped battery cells configured such that the shock test apparatus is easily manipulated and stored while the structure of the shock test apparatus is simple and a shock test method for pouch-shaped battery cells using the same.

It is a further object of the present invention to provide a shock test apparatus for pouch-shaped battery cells configured to have a structure capable of easily measuring change in temperature of a pouch-shaped battery cell when a shock test is performed and preventing damage to temperature measurement devices and a shock test method for pouch-shaped battery cells using the same.

### [Technical Solution]

In order to accomplish the above objects, as defined in the attached set of claims a shock test apparatus includes a flat bottom plate (100), a jig (200) including a first jig member (210) and a second jig member (220) configured to be located respectively at opposite surfaces of a pouch-shaped battery cell (C), each of the first jig member and the second jig member having a quadrangular shape, and a pressing member (300) configured to press a predetermined part of the pouch-shaped battery cell (C), and a plurality of fastening members (230) configured to fix the first jig member (210) and the second jig member (220) to each other while adjusting a distance therebetween may be provided at an edge of each of the first jig member (210) and the second jig member (220) so as to extend therethrough.

Also, in the shock test apparatus according to the present invention, each of an upper side and a lower side of the first jig member (210) may have a first incision portion (211) depressed inwards by a predetermined area and a central part of the first jig member (210) may have a first through-hole portion (212), and each of an upper side and a lower side of the second jig member (220) may have a second incision portion (221) depressed inwards by a predetermined area and a central part the second jig member (220) may have a second through-hole portion (222).

Also, in the shock test apparatus according to the present invention, a plurality of fastening members (230) configured to fix the first jig member (210) and the second jig member (220) to each other while adjusting a distance therebetween are provided at an edge of each of the first jig member (210) and the second jig member (220).

Also, in the shock test apparatus according to the present invention, the pressing member (300) may include a flat pressing plate (310) and a pressing cylinder (320) protruding from one surface of the pressing plate (310).

Also, in the shock test apparatus according to the present invention, the pressing cylinder (320) may have a hemispherical shape.

Also, in the shock test apparatus according to the present invention, the pressing plate may have a pair of bent portions (311) extending in a perpendicular direction by a predetermined length, the bent portions being bent to face each other, to the bent portions defining a receiving space (S) at opposite edges of the other surface of the pressing plate (310).

Also, in the shock test apparatus according to the present invention, the pressing cylinder (320) may have the diameter (W1) that is less than the width (W2) of the incision portion.

In addition, a shock test method using the shock test apparatus for pouch-shaped battery cells includes a first step of locating a pouch-shaped battery cell (C) between the first jig member (210) and the second jig member (220) and fixing the first jig member and the second jig member to each other, a second step of bringing the jig (200) into tight contact with one surface of the bottom plate (100) while the pouch-shaped battery cell (C) is fixed to the jig, and a third step of pressing a predetermined part of the pouch-shaped battery cell (C) fixed to the jig (200) using the pressing member (300).

Also, the shock test method according to the present invention may further include a step of connecting a sensing unit (400) to a surface of the pouch-shaped battery cell (C) before the third step.

Also, in the shock test method according to the present invention, the sensing unit (400) may include a sensing pad (410) attached to the surface of the pouch-shaped battery cell (C) and a sensing cable (420) having one side connected to the sensing pad (410), and the sensing pad (410) and the sensing cable (420) may be disposed to pass through the first through-hole portion (212) of the first jig member (210) or the second through-hole portion (222) of the second jig member (220).

Also, in the shock test method according to the present invention, in the first step, an electrode lead of the pouch-shaped battery cell (C) may be bent by a predetermined angle.

Also, in the shock test method according to the present invention, the predetermined angle may be 80° or more.

### [Advantageous Effects]

As is apparent from the above description, a shock test apparatus for pouch-shaped battery cells according to the present invention and a shock test method for pouch-shaped battery cells using the same have a merit in that a jig member is provided with an incision portion such that a desired part of a pouch-shaped battery cell is pressed and deformed while an edge of the pouch-shaped battery cell is fixed, whereby it is possible to improve reproducibility and reliability in test results.

In addition, the shock test apparatus for pouch-shaped battery cells according to the present invention and the shock test method for pouch-shaped battery cells using the same have an advantage in that the jig member is provided with a through-hole portion such that a sensing unit configured to measure the temperature of the pouch-shaped battery cell is exposed to the outside, whereby it is possible to prevent damage to the sensing unit and to improve accuracy of the test results.

### [Description of Drawings]

FIG. 1 is a perspective view showing conventional battery test equipment.
FIG. 2 is an exploded perspective view showing a shock test apparatus for pouch-shaped battery cells according to a preferred embodiment of the present invention.
FIG. 3 is a perspective view showing the state in which the shock test apparatus for pouch-shaped battery cells according to the preferred embodiment of the present invention is stored.
FIG. 4 is a perspective view showing the state in which a battery cell is mounted in the shock test apparatus for pouch-shaped battery cells according to the present invention.
FIG. 5 is a front view showing the state in which the battery cell is mounted in the shock test apparatus for pouch-shaped battery cells according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a shock test apparatus for pouch-shaped battery cells according to the present invention and a shock test method for pouch-shaped battery cells using the same will be described with reference to the accompanying drawings.

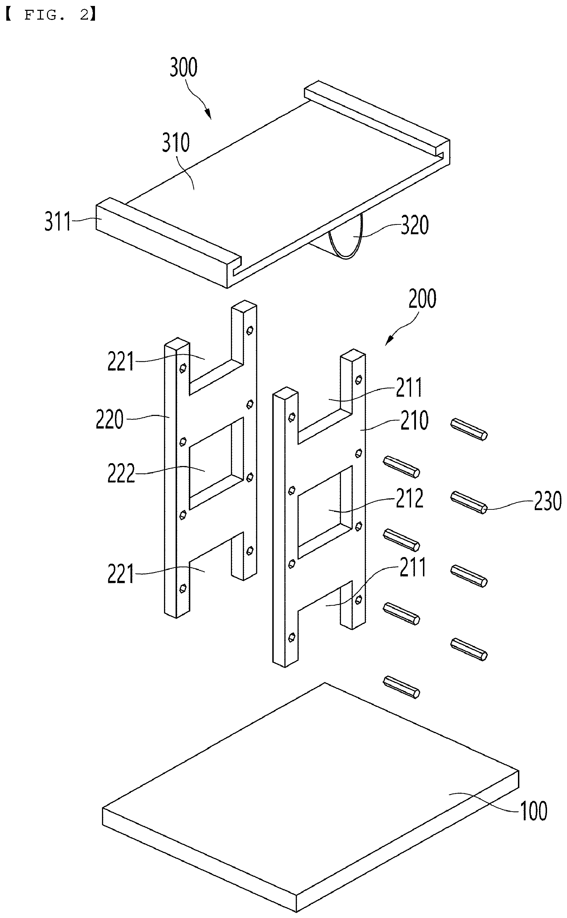

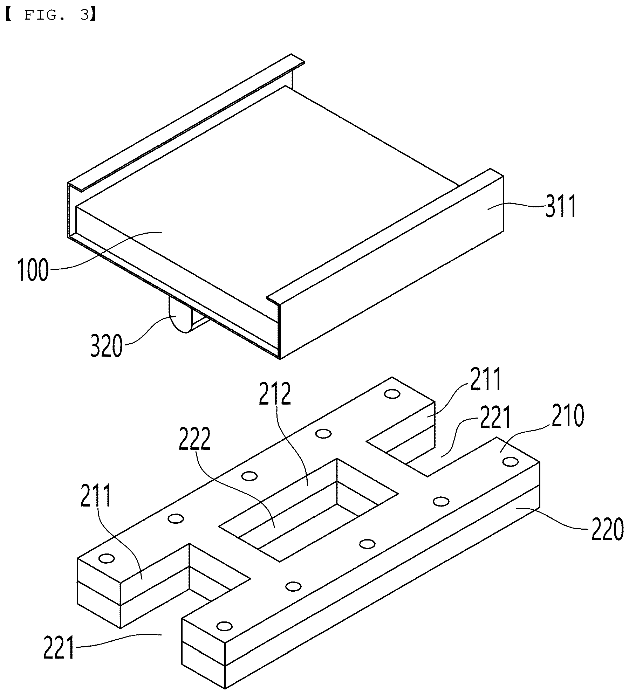

FIG. 2 is an exploded perspective view showing a shock test apparatus for pouch-shaped battery cells according to a preferred embodiment of the present invention, and FIG. 3 is a perspective view showing the state in which the shock test apparatus for pouch-shaped battery cells according to the preferred embodiment of the present invention is stored.

As shown in FIGs. 2 and 3, the shock test apparatus for pouch-shaped battery cells according to the present invention includes a bottom plate 100, a jig 200, and a pressing member 300.

The bottom plate 100, which is configured to allow the jig 200 to be seated thereon in the state in which a pouch-shaped battery cell is fixed to the jig and to support the jig, is formed in a flat shape having a predetermined thickness and area.

Here, the material for the bottom plate 100 is not particularly restricted as long as it is possible to withstand shock applied from the pressing member 300 to the jig 200 in the state in which the pouch-shaped battery cell is fixed to the jig. As an example, the bottom plate may be made of a metal material.

The jig 200, which is configured to fix a pouch-shaped battery cell on which a shock test is to be performed, includes a first jig member 210, a second jig member 220, and a fastening member 230.

The first jig member 210 and the second jig member 220 are located at opposite surfaces of a pouch-shaped battery cell disposed such that an electrode lead faces upwards in tight contact therewith in order to fix the pouch-shaped battery cell.

The first jig member 210 and the second jig member 220 are identical in external shape to each other, and each of the first jig member and the second jig member is implemented by a flat plate having a quadrangular structure.

Specifically, the first jig member 210 is provided in each of an upper side and a lower side thereof with a first incision portion 211 depressed inwards by a predetermined area and is provided in a central part thereof with a first through-hole portion 212 incised by a predetermined area.

In the same manner, the second jig member 220 is provided in each of an upper side and a lower side thereof with a second incision portion 221 depressed inwards by a predetermined area and is provided in a central part thereof with a second through-hole portion 222 incised by a predetermined area.

When a shock test is performed on the pouch-shaped battery cell, the electrode lead of the pouch-shaped battery cell is located in the first incision portion 211 and the second incision portion 221, and a pressing cylinder 320 of the pressing member 300 presses the electrode lead located in the incision portions.

When the pressing cylinder 320 moves downwards to press the electrode lead, therefore, the remaining part of a case of the pouch-shaped battery cell excluding the electrode lead is supported by the first jig member 210 and the second jig member 220, whereby the case is not deformed.

The first through-hole portion 212 of the first jig member 210 and the second incision portion 221 of the second jig member 220 are configured to measure change in temperature of the battery cell while the shock test is performed, a detailed description of which will follow.

Meanwhile, the material for each of the first jig member 210 and the second jig member 220 is not particularly restricted as long as it is possible to fix the pouch-shaped battery cell and to withstand shock from the pressing member 300. As an example, each of the first jig member and the second jig member may be made of a metal material.

The fastening member 230 is configured to fix the first jig member 210 and the second jig member 220 to each other in the state in which the pouch-shaped battery cell is interposed therebetween.

That is, the fastening member 230 are provided in plural along edges of the first jig member 210 and the second jig member 220 so as to extend therethrough. As an example, the fastening member 230 may be implemented by a bolt and a nut; however, the present invention is not limited thereto.

Next, the pressing member 300 will be described. The pressing member 300 includes a flat pressing plate 310 and a pressing cylinder 320 protruding from one surface of the pressing plate 310 by a predetermined height.

The pressing cylinder 320, which is configured to push the electrode lead of the pouch-shaped battery cell with a predetermined force, may have a hemispherical shape protruding from one surface of the pressing plate 310 by a predetermined height.

It is preferable for the diameter W1 of the pressing cylinder 320 to be less than the width W2 of the incision portion, more specifically the width of each of the first incision portion 211 and the second incision portion 221.

The reason for this is that, if the diameter W1 of the pressing cylinder 320 is equal to or greater than the width of each of the first incision portion 211 and the second incision portion 221, the pressing cylinder 320 cannot move downwards to the incision portion, whereby the pressing cylinder cannot push the electrode lead of the pouch-shaped battery cell.

Meanwhile, a pair of bent portions 311 extending in a perpendicular direction by a predetermined length and bent so as to face each other is provided at an edge of the other surface of the flat pressing plate 310, i.e. the surface of the pressing plate opposite the surface at which the pressing cylinder 320 is located. A receiving space having a predetermined size may be defined by the pair of bent portions 311.

The bottom plate 100 may be stored in the receiving space in a state of being seated therein, whereby storage of the shock test apparatus is advantageous when not in use.

Although the material for the pressing member 300, which is constituted by the pressing plate 310 and the pressing cylinder 320, is not particularly restricted, the same metal material as the bottom plate 100 or the jig 200 may be used.

Meanwhile, the pressing member 300 must be moved with a predetermined force when the shock test is performed on the pouch-shaped battery cell. Although a worker may push the pressing member by hand, it is preferable to further provide a separate driving unit (not shown) configured to move the pressing member 300 upwards and downwards in order to perform accurate measurement.

For example, the driving unit may be constituted by a tongs-shaped fixing portion configured to hold opposite ends of the pressing plate 310, a guide rail configured to guide the fixing portion so as to be movable upwards and downwards, and a driving shaft configured to move the fixing portion downwards or upwards. However, the construction of the driving unit is not particularly restricted as long as it is possible to move the pressing member 300.

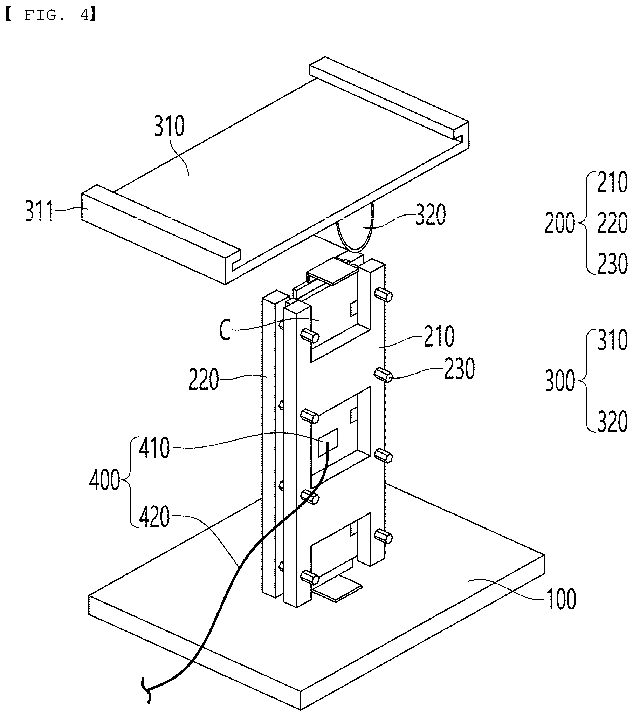

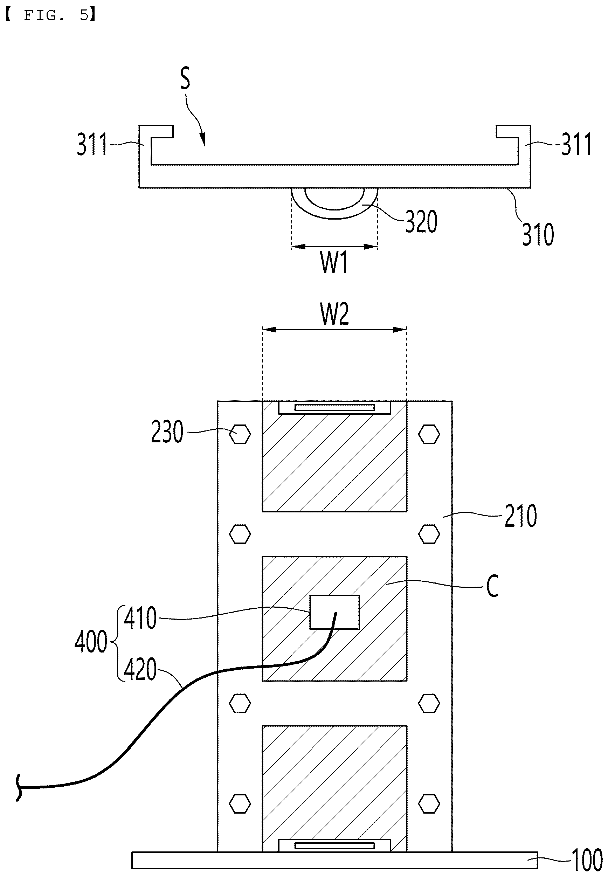

FIG. 4 is a perspective view showing the state in which a battery cell is mounted in the shock test apparatus for pouch-shaped battery cells according to the present invention, and FIG. 5 is a front view showing the state in which the battery cell is mounted in the shock test apparatus for pouch-shaped battery cells according to the present invention.

A shock test method for pouch-shaped battery cells will be described with reference to FIGs. 4 and 5.

The shock test method for pouch-shaped battery cells according to the present invention includes a first step of locating a pouch-shaped battery cell C between a first jig member 210 and a second jig member 220 and fixing the first jig member and the second jig member to each other, a second step of bringing the jig 200 into tight contact with one surface of a bottom plate 100 in the state in which the pouch-shaped battery cell C is fixed to the jig, and a third step of pressing a predetermined part of the pouch-shaped battery cell C fixed to the jig 200 using a pressing member 300.

The first step is a step of locating a pouch-shaped battery cell C to be measured between a first jig member 210 and a second jig member 220 and fixing the first jig member and the second jig member using a fastening member 230.

At this time, an electrode lead of the pouch-shaped battery cell C is bent by about 80° or more, more preferably 90°, and the electrode lead is located in a first incision portion 211 and a second incision portion 221 so as not to protrude out of the first jig member 210 and the second jig member 220.

Meanwhile, the pouch-shaped battery cell C includes a cell assembly, a cell case configured to receive the cell assembly, and a pair of leads.

The cell assembly may be a jelly-roll type cell assembly, which is configured to have a structure in which a long sheet type positive electrode and a long sheet type negative electrode are wound in the state in which a separator is interposed therebetween, a stacked type cell assembly including unit cells, each of which is configured to have a structure in which a rectangular positive electrode and a rectangular negative electrode are stacked in the state in which a separator is interposed therebetween, a stacked and folded type cell assembly, which is configured to have a structure in which unit cells are wound using a long separation film, or a laminated and stacked type cell assembly, which is configured to have a structure in which unit cells are stacked in the state in which a separator is interposed therebetween and are then attached to each other; however, the present invention is not limited thereto.

The cell assembly is mounted in the cell case. The cell case is generally configured to have a laminate sheet structure including an inner layer, a metal layer, and an outer layer. The inner layer is disposed in direct contact with the cell assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene-acrylic acid, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is the most preferably used.

The metal layer, which is disposed so as to abut the inner layer, corresponds to a barrier layer configured to prevent moisture or various kinds of gas from permeating into the battery from the outside. Aluminum foil, which is light and easily formable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the cell assembly. As an example, the outer layer may be made of nylon or polyethylene terephthalate; however, the present invention is not limited thereto.

Meanwhile, the leads, i.e. a positive electrode lead and a negative electrode lead, are exposed out of the case after a positive electrode tab and a negative electrode tab of the cell assembly are electrically connected to the positive electrode lead and the negative electrode lead, respectively. The battery cell described above corresponds to generally known constructions, and therefore a more detailed description thereof will be omitted.

The second step is a step of bringing the pouch-shaped battery cell C, fixed to the first jig member 210 and the second jig member 220 by the fastening member 230, into tight contact with one surface of a bottom plate 100 to prepare for a shock test.

At this time, the bottom plate 100 is located parallel to a bottom surface, and the pouch-shaped battery cell C is disposed perpendicular to the bottom plate 100. Of course, the pouch-shaped battery cell C may be disposed so as to be located parallel to the bottom surface instead of the bottom plate 100 being located perpendicular to the bottom surface.

The third step is a step of pressing a predetermined part of the pouch-shaped battery cell C, specifically the bent electrode lead.

At this time, it is also good to monitor change in temperature of the pouch-shaped battery cell C. To this end, a sensing unit 400 configured to measure temperature may be further provided.

For example, the sensing unit 400 may be constituted by a sensing pad 410 and a sensing cable 420. It is preferable for the sensing pad 410 to be attached to a surface of the pouch-shaped battery cell C, more specifically a surface of the pouch-shaped battery cell C exposed through the first incision portion 211 or the second incision portion 221 so as not to be pressed by the jig member.

One side of the sensing cable 420 passes through the first incision portion 211 or the second incision portion 221 and is then connected to the sensing pad 410, and the other side of the sensing cable is connected to a thermometer (not shown), whereby it is possible to continuously measure change in temperature during a pressing process.

Here, although it is preferable to mount the sensing pad 410 and the sensing cable 420 to the pouch-shaped battery cell C after the pouch-shaped battery cell is fixed to the jig members, a step of fixing the pouch-shaped battery cell C using the jig members after the sensing pad and the sensing cable are mounted to the pouch-shaped battery cell in advance may be performed.

Meanwhile, as previously described, the shock test apparatus may be stored in the state in which the bottom plate 100 is received in the receiving space S of the pressing plate 310.

Those skilled in the art to which the present invention pertains will appreciate that various applications and modifications are possible within the category of the present invention as defined by the appended claims.

### (Description of Reference Symbols)

100: Bottom plate
200: Jig
210: First jig member
211: First incision portion 212: First through-hole portion
220: Second jig member
221: Second incision portion 222: Second through-hole portion
230: Fastening member
300: Pressing member
310: Pressing plate
311: Bent portion
320: Pressing cylinder
400: Sensing unit
410: Sensing pad
420: Sensing Cable
C: Pouch-shaped battery cell
S: Receiving space
W1: Diameter of pressing cylinder
W2: Width of incision portion

## Claims

1. A shock test apparatus for pouch-shaped battery cells, the shock test apparatus comprising:
a flat bottom plate (100);
a jig (200) comprising a first jig member (210) and a second jig member (220) configured to be located respectively at opposite surfaces of a pouch-shaped battery cell (C), each of the first jig member (210) and the second jig member (220) having a quadrangular shape;
a pressing member (300) configured to press a predetermined part of the pouch-shaped battery cell (C), and
**characterized by** a plurality of fastening members (230) configured to fix the first jig member (210) and the second jig member (220) to each other while adjusting a distance therebetween is provided at an edge of each of the first jig member (210) and the second jig member (220) so as to extend therethrough.

2. The shock test apparatus according to claim 1, wherein each of an upper side and a lower side of the first jig member (210) has a first incision portion (211) depressed inwards by a predetermined area and a central part of the first jig member (210) has a first through-hole portion (212), and
each of an upper side and a lower side of the second jig member (220) has a second incision portion (221) depressed inwards by a predetermined area and a central part of the second jig member (220) has a second through-hole portion (222).

3. The shock test apparatus according to claim 2, wherein the pressing member (300) comprises:
a flat pressing plate (310); and
a pressing cylinder (320) protruding from one surface of the pressing plate (310).

4. The shock test apparatus according to claim 3, wherein the pressing cylinder (320) has a hemispherical shape.

5. The shock test apparatus according to claim 3, wherein the pressing plate (310) has a pair of bent portions (311) extending in a perpendicular direction by a predetermined length, the bent portions (311) being bent to face each other, the bent portions (311) defining a receiving space (S) at opposite edges of the other surface of the pressing plate (310).

6. The shock test apparatus according to claim 4, wherein the pressing cylinder (320) has a diameter (W1) that is less than a width of the incision portion (W2).

7. A shock test method for pouch-shaped battery cells (C) using the shock test apparatus according to any one of claims 1 to 6, the shock test method comprising:
a first step of locating a pouch-shaped battery cell (C) between the first jig member (210) and the second jig member (220) and fixing the first jig member (210) and the second jig member (220) to each other;
a second step of bringing the jig (200) into tight contact with one surface of the bottom plate (100) while the pouch-shaped battery cell (C) is fixed to the jig (200); and
a third step of pressing a predetermined part of the pouch-shaped battery cell (C) fixed to the jig (200) using the pressing member (300).

8. The shock test method according to claim 7, further comprising a step of connecting a sensing unit (400) to a surface of the pouch-shaped battery cell (C) before the third step.

9. The shock test method according to claim 8, wherein the sensing unit (400) comprises a sensing pad (410) attached to the surface of the pouch-shaped battery cell (C) and a sensing cable (420) having one side connected to the sensing pad (410), and
the sensing pad (410) and the sensing cable (420) are disposed to pass through the first through-hole portion (212) of the first jig member (210) or the second through-hole portion (222) of the second jig member (220).

10. The shock test method according to claim 9, wherein, in the first step, an electrode lead of the pouch-shaped battery cell (C) is bent by a predetermined angle.

11. The shock test method according to claim 10, wherein the predetermined angle is 80° or more.

## Patentansprüche

1. Stoßtestvorrichtung für beutelförmige Batteriezellen, wobei die Stoßtestvorrichtung umfasst:
eine flache Bodenplatte (100);
eine Vorrichtung (200), welche ein erstes Vorrichtungselement (210) und ein zweites Vorrichtungselement (220) umfasst, welche dazu eingerichtet sind, jeweils an entgegengesetzten Flächen einer beutelförmigen Batteriezelle (C) angeordnet zu sein, wobei jedes aus dem ersten Vorrichtungselement (210) und dem zweiten Vorrichtungselement (220) eine viereckige Form aufweist;
ein Druckelement (300), welches dazu eingerichtet ist, einen vorbestimmten Teil der beutelförmigen Batteriezelle (C) zu drücken, und
**dadurch gekennzeichnet, dass** eine Mehrzahl von Befestigungselementen (230), welche dazu eingerichtet sind, das erste Vorrichtungselement (210) und das zweite Vorrichtungselement (220) miteinander zu fixieren, während sie einen Abstand dazwischen anpassen, an einem Rand von jedem aus dem ersten Vorrichtungselement (210) und dem zweiten Vorrichtungselement (220) bereitgestellt sind, um sich dadurch zu erstrecken.

2. Stoßtestvorrichtung nach Anspruch 1, wobei jede aus einer oberen Seite und einer unteren Seite des ersten Vorrichtungselements (210) einen ersten Einschnittabschnitt (211) aufweist, welcher um einen vorbestimmten Bereich nach innen abgesenkt ist, und ein zentraler Teil des ersten Vorrichtungselements (210) einen ersten Durchgangslochabschnitt (212) aufweist, und
jede aus einer oberen Seite und einer unteren Seite des zweiten Vorrichtungselements (220) einen zweiten Einschnittabschnitt (221) aufweist, welcher um einen vorbestimmten Bereich nach innen abgesenkt ist, und ein zentraler Teil des zweiten Vorrichtungselements (220) einen zweiten Durchgangslochabschnitt (222) aufweist.

3. Stoßtestvorrichtung nach Anspruch 2, wobei das Druckelement (300) umfasst:
eine flache Druckplatte (310); und
einen Druckzylinder (320), welcher von einer Fläche der Druckplatte (310) hervorsteht.

4. Stoßtestvorrichtung nach Anspruch 3, wobei der Druckzylinder (320) eine Halbkugelform aufweist.

5. Stoßtestvorrichtung nach Anspruch 3, wobei die Druckplatte (310) ein Paar gebogener Abschnitte (311) aufweist, welche sich in einer senkrechten Richtung um eine vorbestimmte Länge erstrecken, wobei die gebogenen Abschnitte (311) gebogen sind, um einander zugewandt zu sein, wobei die gebogenen Abschnitte (311) an entgegengesetzten Rändern der anderen Fläche der Druckplatte (310) einen Aufnahmeraum (S) definieren.

6. Stoßtestvorrichtung nach Anspruch 4, wobei der Druckzylinder (320) einen Durchmesser (W1) aufweist, welcher geringer als eine Breite des Einschnittabschnitts (W2) ist.

7. Stoßtestverfahren für beutelförmige Batteriezellen (C) unter Verwendung der Stoßtestvorrichtung nach einem der Ansprüche 1 bis 6, wobei das Stoßtestverfahren umfasst:
einen ersten Schritt eines Anordnens einer beutelförmigen Batteriezelle (C) zwischen dem ersten Vorrichtungselement (210) und dem zweiten Vorrichtungselement (220) und eines Fixierens des ersten Vorrichtungselements (210) und des zweiten Vorrichtungselements (220) miteinander;
einen zweiten Schritt eines Versetzens der Vorrichtung (200) in engen Kontakt mit einer Fläche der Bodenplatte (100), während die beutelförmige Batteriezelle (C) an der Vorrichtung (200) fixiert wird; und
einen dritten Schritt eines Drückens eines vorbestimmten Teils der beutelförmigen Batteriezelle (C), welche an der Vorrichtung (200) fixiert ist, unter Verwendung des Druckelements (300).

8. Stoßtestverfahren nach Anspruch 7, ferner umfassend einen Schritt eines Verbindens einer Erfassungseinheit (400) mit einer Fläche der beutelförmigen Batteriezelle (C) vor dem dritten Schritt.

9. Stoßtestverfahren nach Anspruch 8, wobei die Erfassungseinheit (400) eine Erfassungsunterlage (410), welche an der Fläche der beutelförmigen Batteriezelle (C) befestigt ist, und ein Erfassungskabel (420) umfasst, welches eine mit der Erfassungsunterlage verbundene Seite aufweist, und
wobei die Erfassungsunterlage (410) und das Erfassungskabel (420) dazu angeordnet sind, durch den ersten Durchgangslochabschnitt (212) des ersten Vorrichtungselements (210) oder den zweiten Durchgangslochabschnitt (222) des zweiten Vorrichtungselements (220) zu passieren.

10. Stoßtestverfahren nach Anspruch 9, wobei, in dem ersten Schritt, eine Elektrodenleitung der beutelförmigen Batteriezelle (C) um einen vorbestimmten Winkel gebogen ist.

11. Stoßtestverfahren nach Anspruch 10, wobei der vorbestimmte Winkel 80° oder mehr beträgt.

## Revendications

1. Appareil d'essai de choc pour des éléments de batterie en forme de poche, l'appareil d'essai de choc comprenant :
une plaque de fond plate (100) ;
un gabarit (200) comprenant un premier organe de gabarit (210) et un second organe de gabarit (220) configurés pour être situés respectivement sur des surfaces opposées d'un élément de batterie en forme de poche (C), chacun du premier organe de gabarit (210) et du second organe de gabarit (220) ayant une forme quadrangulaire ;
un organe de pressage (300) configuré pour presser une partie prédéterminée de l'élément de batterie en forme de poche (C), et
**caractérisé par**
une pluralité d'organes d'arrimage (230) configurés pour fixer le premier organe de gabarit (210) et le second organe de gabarit (220) l'un à l'autre tout en ajustant une distance entre eux, est prévue au niveau d'un bord de chacun du premier organe de gabarit (210) et du second organe de gabarit (220) de manière à s'étendre à travers ceux-ci.

2. Appareil d'essai de choc selon la revendication 1, dans lequel chacun d'un côté supérieur et d'un côté inférieur du premier organe de gabarit (210) présente une première portion d'incision (211) enfoncée vers l'intérieur par une zone prédéterminée et une partie centrale du premier organe de gabarit (210) présente une première portion de trou traversant (212), et
chacun d'un côté supérieur et d'un côté inférieur du second organe de gabarit (220) présente une seconde portion d'incision (221) enfoncée vers l'intérieur par une zone prédéterminée et une partie centrale du second organe de gabarit (220) présente une seconde portion de trou traversant (222).

3. Appareil d'essai de choc selon la revendication 2, dans lequel l'organe de pressage (300) comprend :
une plaque de pressage plate (310) ; et
un cylindre de pressage (320) faisant saillie d'une surface de la plaque de pressage (310).

4. Appareil d'essai de choc selon la revendication 3, dans lequel le cylindre de pressage (320) présente une forme hémisphérique.

5. Appareil d'essai de choc selon la revendication 3, dans lequel la plaque de pressage (310) présente une paire de portions courbées (311) s'étendant dans une direction perpendiculaire d'une longueur prédéterminée, les portions courbées (311) étant courbées pour être en regard l'une de l'autre, les portions courbées (311) définissant un espace de réception (S) à des bords opposés de l'autre surface de la plaque de pressage (310).

6. Appareil d'essai de choc selon la revendication 4, dans lequel le cylindre de pressage (320) présente un diamètre (W1) inférieur à une largeur de la portion d'incision (W2).

7. Procédé d'essai de choc pour des éléments de batterie en forme de poche (C) à l'aide de l'appareil d'essai de choc selon l'une quelconque des revendications 1 à 6, le procédé d'essai de choc comprenant :
une première étape de mise en place d'un élément de batterie en forme de poche (C) entre le premier organe de gabarit (210) et le second organe de gabarit (220) et de fixation du premier organe de gabarit (210) et du second organe de gabarit (220) l'un à l'autre ;
une deuxième étape de mise en contact étroit du gabarit (200) avec une surface de la plaque de fond (100) pendant que l'élément de batterie en forme de poche (C) est fixé au gabarit (200) ; et
une troisième étape de pressage d'une partie prédéterminée de l'élément de batterie en forme de poche (C) fixée au gabarit (200) à l'aide de l'organe de pressage (300).

8. Procédé d'essai de choc selon la revendication 7, comprenant en outre une étape de connexion d'une unité de captage (400) à une surface de l'élément de batterie en forme de poche (C) avant la troisième étape.

9. Procédé d'essai de choc selon la revendication 8, dans lequel l'unité de captage (400) comprend un coussinet de captage (410) attaché à la surface de l'élément de batterie en forme de poche (C) et un câble de captage (420) ayant un côté connecté au coussinet de captage (410), et
le coussinet de captage (410) et le câble de captage (420) sont disposés pour passer à travers la première portion de trou traversant (212) du premier organe de gabarit (210) ou la seconde portion de trou traversant (222) du second organe de gabarit (220).

10. Procédé d'essai de choc selon la revendication 9, dans lequel, à la première étape, un fil d'électrode de l'élément de batterie en forme de poche (C) est plié selon un angle prédéterminé.

11. Procédé d'essai de choc selon la revendication 10, dans lequel l'angle prédéterminé est de 80° ou plus.
